# EUROPEAN PATENT APPLICATION

(11) **EP 4 722 592 A1**
(43) Date of publication of application: **08.04.2026**
(21) Application number: 25201348.7
(22) Date of filing: 10.09.2025
(51) Int. Cl.: F23R 3/14, F23R 3/28

(54) **TURBINE ENGINE HAVING A FUEL NOZZLE**

(30) Priority: 04.10.2024 US 202418906377
(71) Applicant: General Electric Company, Evendale, Ohio 45215 (US)
(72) Inventor: SAMPATH, Karthikeyan, 560066 Bengaluru (IN); NAIK, Pradeep, 560066 Bengaluru (IN); COOPER, Clayton, Evendale, 45241 (US); PAL, Sibtosh, Evendale, 45241 (US); BUCARO, Michael, Evendale, 45215 (US); VISE, Steven, West Chester, 45069 (US); BENJAMIN, Michael, Evendale, 45241 (US); WICKERSHAM, Andrew, Evendale, 45241 (US)
(74) Representative: Openshaw & Co.

(57) **Abstract**

A turbine engine (10) can combust fuel to drive a turbine, which drives the engine. A fuel nozzle (100), (200), (300), (400), (500) can supply fuel for combustion or ignition of the fuel. The fuel nozzle (100), (200), (300), (400), (500) can include a central body (110) defining a first fuel passage (111). An annular first wall (121) circumferentially surrounds the central body (110) and is spaced therefrom to define a first airflow passage (131) therebetween. A set of first swirler vanes (104) is circumferentially spaced about the central body (110) and disposed within the first airflow passage (131). The fuel nozzle (100), (200), (300), (400), (500) can supply a mixture of fuel and air for combustion.

## Description

### FIELD

The present subject matter relates generally to an engine component and more specifically to a turbine engine having a combustor section including a fuel nozzle.

### BACKGROUND

An engine, such as a turbine engine, includes a turbine that is driven by a flow of combustion gases generated by combustion of a combustible fuel within a combustor of the engine. The engine utilizes a fuel nozzle to inject the combustible fuel into the combustor where it is ignited to create combustion gasses. A flow of the combustion gases passing through the engine can rotate a multitude of turbine blades, which, in turn, rotate a compressor to provide compressed air to the combustor for combustion.

Generally, air (e.g., compressed air) and the combustible fuel, (e.g., a hydrocarbon fuel), are injected into a combustion chamber and then the fuel is burned in the presence of the air to produce hot gas. A fuel nozzle is typically used to inject the combustible fuel into the combustor. The fuel nozzle can mix the fuel with air to achieve efficient combustion.

The hot combustion gas is then fed to the turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbon (UHC) (e.g., methane and volatile organic compounds that contribute to the formation of atmospheric ozone), and other oxides, including oxides of sulfur (e.g., SO₂ and SO₃).

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of an engine in accordance with an exemplary aspect of the present disclosure.
FIG. 2A is a cross-section view of a fuel nozzle for use with the engine of FIG. 1 in accordance with an exemplary aspect of the present disclosure.
FIG. 2B is an offset section view taken along the line IIB-IIB of FIG. 2A in accordance with an exemplary aspect of the present disclosure.
FIG. 3 is another offset section view taken along the line IIB-IIB of FIG. 2A in accordance with another exemplary aspect of the present disclosure.
FIG. 4A is a cross-section view of a fuel nozzle for use with the engine of FIG. 1 in accordance with yet another exemplary aspect of the present disclosure.
FIG. 4B is an offset section view taken along the line IVB-IVB of FIG. 4A in accordance with an exemplary aspect of the present disclosure.
FIG. 4C is an offset section view taken along the line I-I of FIG. 4A in accordance with another exemplary aspect of the present disclosure.
FIG. 5A is a cross-section view of a fuel nozzle for use with the engine of FIG. 1 in accordance with yet another exemplary aspect of the present disclosure.
FIG. 5B is an offset section view taken along the line VB-VB of FIG. 5A in accordance with an exemplary aspect of the present disclosure.

### DETAILED DESCRIPTION

Aspects of the disclosure herein are directed to a fuel nozzle architecture located within an engine component, and more specifically to a fuel nozzle structure configured for use with heightened combustion engine temperatures, such as those utilizing a hydrogen fuel. Hydrogen fuels can eliminate carbon emissions, but generate challenges relating to flame holding due to the higher flame speed. Current combustors include a durability risk when using such fuels or other high-temperature fuels due to flame holding on combustor components resultant of flashback.

The fuel nozzle as disclosed herein is especially well adapted for the use of hydrogen fuel (hereinafter, "H2 fuel"). Specifically, the fuel nozzle is especially well adapted to feed a flow of H2 fuel to the combustion chamber. The flow of H2 fuel can include a gaseous H2 fuel, a liquid H2 fuel, or a combination thereof. The flow of H2 fuel can further be mixed with other fuels or fluids such as, but not limited to, natural gas, coke oven gas, diesel, Jet-A, or the like. H2 fuels, when compared to traditional fuels (e.g., carbon fuels, petroleum fuels, etc.), have a higher burn temperature and velocity. Further, flashback can occur when using H2 fuels. As used herein, flashback refers to unintended flame propagation when the H2 fuel is combusted. H2 fuel has higher volatility, meaning that once the H2 fuel is combusted or ignited, the flame generated by the ignition of the H2 fuel can expand in an undesired location; in other words, flashback can occur. For example, the flame can expand into the fuel nozzle or igniter. The fuel nozzle, as described herein, ensures flashback of the H2 fuel does not occur. Auto-ignition of the H2 fuel can occur if the H2 fuel is too hot. Auto-ignition of the H2 fuel can be undesirable in certain locations of the combustor section. The fuel nozzle, as described herein, is designed to ensure the H2 fuel does not auto-ignite within the fuel nozzle, and that flashback does not occur.

As used herein, the term "gaseous fuel" or iterations thereof refers to a combustible fuel in a gaseous state. It will be appreciated that gaseous fuel is different from atomized fuel. Atomized fuel utilizes an impeller, orifices, or the like to take a liquid fuel and atomize the liquid fuel into very small droplets.

For purposes of illustration, the present disclosure will be described with respect to a turbine engine for an aircraft with a combustor driving the turbine. It will be understood, however, that aspects of the disclosure herein are not so limited and may have general applicability within an engine, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

Reference will now be made in detail to the fuel nozzle architecture, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspects described herein should be considered exemplary.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

The term "flame holding" relates to the condition of continuous combustion of a fuel such that a flame is maintained along or near to a component, and usually a portion of the fuel nozzle as described herein, and the term "flashback" relate to a retrogression of the combustion flame in the upstream direction.

As used herein, the term "swirl" or iterations thereof refers to a directional movement of a fluid in at least two directions (e.g., radial, circumferential, and/or axial). A "swirl" can be formed as a twisting or spiraling pattern.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

As used herein, the terms "first", "second", "third" and the like may be used interchangeably to distinguish one component from another and are not intended to signify location or importance of the individual components.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In certain exemplary aspects of the present disclosure, a turbine engine defining a centerline and a circumferential direction is provided. The turbine engine may generally include a turbomachine and a rotor assembly. The rotor assembly may be driven by the turbomachine. The turbomachine, the rotor assembly, or both may define a substantially annular flow path relative to the centerline of the turbine engine. The turbine engine includes a combustor positioned upstream of the turbine configured to drive the turbine.

The combustor introduces fuel from a fuel nozzle, which is mixed with air which can be passed through a swirler assembly, such as a set of vanes, and then combusted within the combustor to drive the turbine. Increases in efficiency and reduction in emissions have driven the need to use fuel that burns cleaner or at higher temperatures, such as utilizing hydrogen fuel. There is a need to improve durability of the combustor under these operating parameters, such as improved flame control to prevent flame holding on the fuel nozzle components.

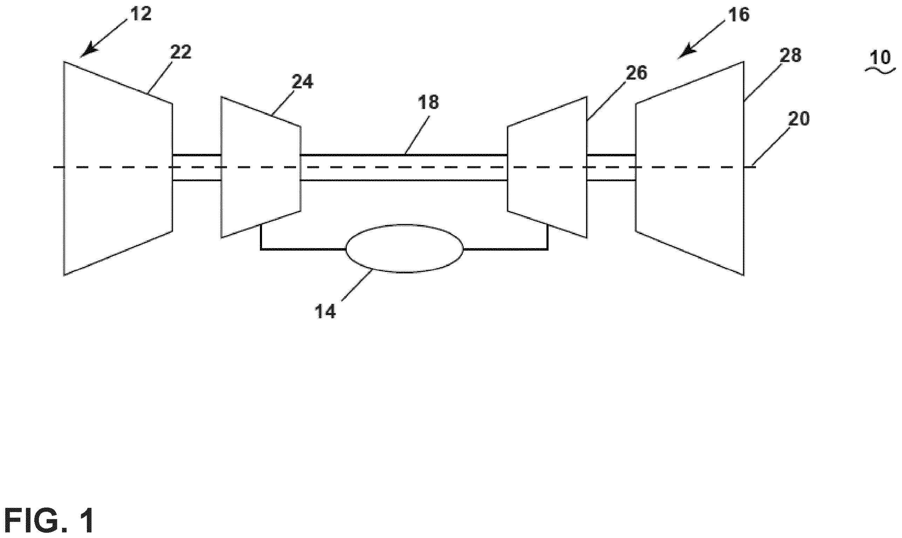

FIG. 1 is a schematic view of a turbine engine 10 in accordance with a non-limiting aspect. As a non-limiting example, the turbine engine 10 can be used within an aircraft. The turbine engine 10 can include, at least, a compressor section 12, a combustor section 14, and a turbine section 16. A drive shaft 18 rotationally couples the compressor and turbine sections 12, 16, such that rotation of one affects the rotation of the other, and defines a rotational axis 20 for the turbine engine 10.

The compressor section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 can operatively couple the LP compressor 22, the HP compressor 24, the LP turbine 28 and the HP turbine 26 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the turbine engine 10. It will be appreciated that the representation of the compressor section 12 is merely schematic and that there can be any number of stages. Further, it is contemplated that there can be any other number of components within the compressor section 12.

Similar to the compressor section 12, the turbine section 16 can include a plurality of axially spaced stages, with each stage having a set of circumferentially spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section 16 is merely a schematic representation. Further, it is contemplated that there can be any other number of components within the turbine section 16.

The combustor section 14 can be provided serially between the compressor section 12 and the turbine section 16. The combustor section 14 can be fluidly coupled to at least a portion of the compressor section 12 and the turbine section 16 such that the combustor section 14 at least partially fluidly couples the compressor section 12 to the turbine section 16. As a non-limiting example, the combustor section 14 can be fluidly coupled to the HP compressor 24 at an upstream end of the combustor section 14 and to the HP turbine 26 at a downstream end of the combustor section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustor section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustor section 14, and turbine section 16 of the turbine engine 10.

Prior to ignition in the combustor section 14, the pressurized air and fuel can be mixed using a fuel nozzle which can include a set of vanes, such as a set of swirler vanes. The fuel can be in a gaseous form (e.g., hydrogen, by way of non-limiting example) or in a liquid form, and, thus, may be characterized as being fluid fuel. Although a single fuel nozzle will be illustrated and discussed herein, for ease of description and understanding, it will be appreciated that in various aspects, combustor section 14 can include any desired number of fuel nozzles without departing from the disclosure herein. The fuel nozzle can be part of the combustor section 14 which is configured to initiate and host a flame, for example, in a combustion chamber (not shown). However, in some non-limiting aspects, the burning may alternatively take place inside the turbine section 16. An exact location of the burning is not germane nor limiting to the aspects disclosed herein.

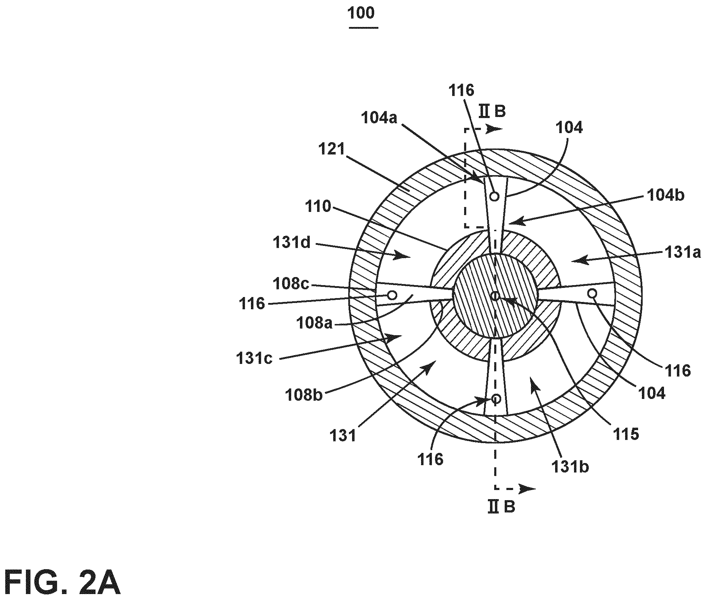

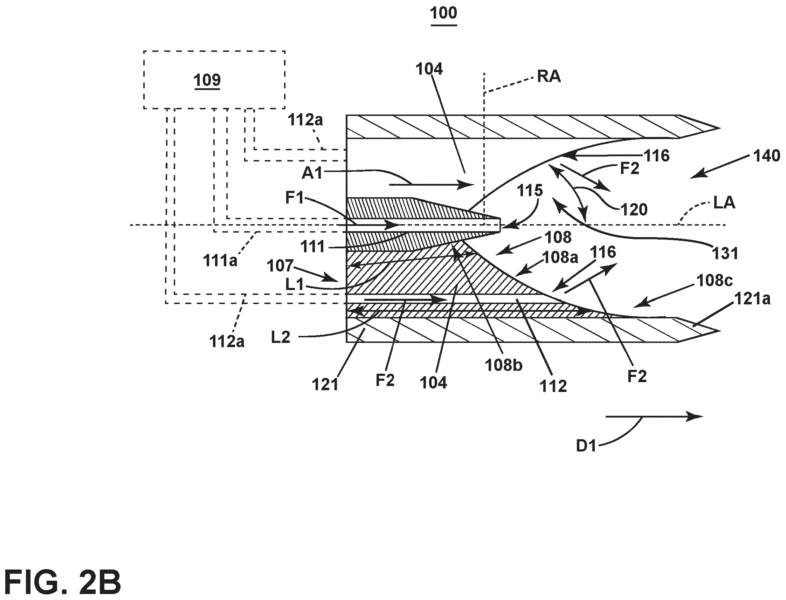

FIG. 2A is a cross-section view of one non-limiting aspect of a fuel nozzle 100, while FIG. 2B depicts an offset section view taken along the line I-I of FIG. 2A of the fuel nozzle 100. With simultaneous reference to FIGS. 2A and 2B, the fuel nozzle 100 can include a central body 110, having a first fuel passage 111 (FIG. 2B) defined therethrough, and a first orifice 115 defined in fluid communication with the first fuel passage 111. The first fuel passage 111 can extend axially through the central body 110. For example, in non-limiting aspects, the fuel nozzle 100 can have a substantially cylindrical shape, defining a central longitudinal axis LA, and a radial axis RA, orthogonal to the longitudinal axis LA. The first fuel passage 111 can be substantially parallel with the longitudinal axis LA of the fuel nozzle 100. The fuel nozzle 100 can define a first flow direction D1, (indicated by a solid arrow in FIG. 2B) from upstream to downstream. The flow direction D1 can be substantially parallel with the longitudinal axis LA of the fuel nozzle 100. A combustion zone 140 can be defined downstream of the central body 110. An annular first wall 121 can be arranged to circumferentially surround the central body 110 and spaced therefrom to define an annular first airflow passage 131 therebetween. The annular first wall 121 and the central body 110 can be concentric. The annular first wall 121 can extend axially downstream from the central body 110 to circumscribe a portion of the combustion zone 140. The annular first airflow passage 131 is configured to permit a first airflow (indicated by solid arrow A1) to flow therethrough in the flow direction D1. For example, the first airflow A1 can comprise a flow of compressed air received from the compressor section 12.

The annular first wall 121 can include a first diverging portion 121a at a downstream end of the annular first wall 121. The first diverging portion 121a defines an increasing or diverging cross-sectional area. In an alternative example, the annular first wall 121 can be formed as converging, diverging, constant, or any combination thereof, which can be defined by linear, curved, or discrete wall geometries defining the annular first wall 121, or combinations thereof. The first diverging portion 121a of annular first wall 121 provides for reducing flow recirculation at the downstream end of the annular first wall 121, which can eliminate stagnation points and flame holding.

A set of first swirler vanes 104 can be disposed in the annular first airflow passage 131. The set of first swirler vanes 104 can be configured within the annular first airflow passage 131 to impart a helical or tangential swirl to the first airflow A1. At least one of the first swirler vanes 104 can define a respective second fuel passage 112 therein, and further define a respective second orifice 116 in fluid communication with the respective second fuel passage 112. The respective second fuel passage 112 can extend axially through at least a portion of a respective first swirler vane 104 (e.g., parallel with the longitudinal axis LA of the fuel nozzle 100).

The set of first swirler vanes 104 can be circumferentially spaced about the central body 110. The set of first swirler vanes 104 can be disposed within the annular first airflow passage 131. The first swirler vanes 104 can extend radially outward (e.g., relative the longitudinal axis LA of the fuel nozzle 100) within the annular first airflow passage 131 from the central body 110 to the annular first wall 121. For example, the first swirler vanes 104 can be coupled at a first end 104a to the central body 110 and can be coupled at an opposing second end 104b to the annular first wall 121. In this way, the first swirler vanes 104 can divide the annular first airflow passage 131 into a set of first airflow passage circumferential segments 131a, 131b, 131c, 131d. The first end 104a can define a first axial length (indicated by double headed arrow, "L1" in FIG. 2B), and the second end can define a second axial length (indicated by double headed arrow, "L2"). In non-limiting aspects, the second axial length L2 is longer than the first axial length L1. The first swirler vanes 104 can further include an upstream or pressure side 107 and a downstream or suction side 108 opposingly spaced from the pressure side 107. The suction side 108 can include a suction side wall 108a. The suction side wall 108a can diverge from or extend at a non-zero angle 120 relative to the longitudinal axis LA of the fuel nozzle 100. For example, in non-limiting aspects, the suction side wall 108a can be coupled at a radially inner extent 108b to the central body 110, and extend radially outward at a non-zero angle relative the longitudinal axis LA of the fuel nozzle 100 within the annular first airflow passage 131, and further coupled at a radially outer extent 108c to the annular first wall 121. As illustrated, in some non-limiting aspects, the radially outer extent 108c and be coupled to the annular first wall 121 downstream of the first orifice 115, for example when the second axial length is longer than the first axial length. For example, such an arrangement of the set of first swirler vanes 104, can result in the first airflow A1 having a higher axial velocity near the central body 110 than near the annular first wall 121. The higher axial velocity of the first airflow A1 near the central body 110 will help to push the flame downstream (e.g., aft). It is contemplated that other vane shapes can be implemented as desired to tailor the first airflow A1 velocity profile without departing from the scope of the disclosure.

Although not depicted, it is contemplated that in other non-limiting aspects, the radially outer extent 108c can be coupled to the annular first wall 121 upstream of the first orifice 115. In still other aspects, the radially outer extent 108c can be coupled to the annular first wall 121 in radial alignment with the first orifice 115. The set of first swirler vanes 104 may be manufactured using a direct laser manufacturing sintering (DLMS) method.

While FIG. 2A depicts the fuel nozzle 100 as having four first swirler vanes 104, other aspects are not so limited, and the fuel nozzle 100 can include any desired number of first swirler vanes 104, including only one, without departing from the scope of the disclosure. Additionally, although FIG. 2A depicts the first swirler vanes 104 being arranged symmetrically about the central body 110, for example at substantially equal circumferential distances from each other around the central body 110, in other aspects, a spacing between the first swirler vanes 104 can vary, and the first swirler vanes 104 can be arranged non-symmetrically around the central body 110. For example, in some aspects, a circumferential spacing between two adjacent first swirler vanes 104 can be different than another two adjacent first swirler vanes 104.

The first fuel passage 111 is configured to permit a first flow of fuel (indicated by solid arrow, "F1") in the first flow direction D1, and the first orifice 115 is configured to inject the first flow of fuel F1 from the first fuel passage 111 toward the combustion zone 140. The first fuel passage 111 can be in fluid communication with a fuel supply such as a fuel manifold or fuel plenum 109, for example via a first fuel line 111a, to receive the first flow of fuel F1 therefrom. However, in some aspects, air can be provided within the first fuel passage 111, while other fluids or materials are contemplated, such as fuel, fuel mixes, or diluents. The fluid within the first fuel passage 111 can have a swirl or helical component, such as imparted by a swirler or vane, or can be provided as non-swirling or laminar flow, in additional non-limiting examples.

Each respective second fuel passage 112 can be configured to permit a respective second flow of fuel (indicated by solid arrow, "F2") in the first flow direction D1. The respective second orifice 116 can be configured to inject the second flow of fuel F2 from the respective second fuel passage 112 toward the combustion zone 140. In non-limiting aspects, each respective second orifice 116 can be defined through a respective suction side wall 108a. The second fuel passage 112 can be in fluid communication with a fuel supply such as a fuel manifold or fuel plenum 109, for example via a respective second fuel line 112a, to receive the second flow of fuel F2 therefrom. In non-limiting aspects, each respective second orifice 116 is configured to inject the second flow of fuel F2, as a converging flow, e.g., tangential to the longitudinal axis LA of the fuel nozzle 100, into the combustion zone 140.

In operation, compressed air from the compressor section 12 (shown in FIG. 1) can enter the annular first airflow passage 131 of the fuel nozzle 100 as the first airflow A1 along the first flow direction D1. The first fuel flow F1 is provided from the fuel plenum 109 to the first fuel passage 111 and axially injected into the combustion zone 140 through the first orifice 115 defined through the central body 110. The set of first swirler vanes 104 arranged within the annular first airflow passage 131 can impart a tangential, swirling, or helical component to the first airflow A1. The set of first swirler vanes 104 can also separate the first airflow A1 into multiple separate flows. For example, the four first swirler vanes 104 depicted in FIG. 2A can separate the first airflow A1 into four circumferentially separated first airflows A1, each within a respective first airflow passage circumferential segment 131a, 131b, 131c, 131d. In other aspects, the number of circumferentially separated first airflows A1 can be equal to the number of first swirler vanes 104. The circumferentially separated first airflows A1 within the first airflow passage 131 separated by the first swirler vanes 104 can swirl in the same direction to minimize any shear between the circumferentially separated first airflows A1, while counter-flow is contemplated where increased mixing or turbulence may be advantageous.

The first airflow A1 mixes with the first fuel flow F1 injected by the first orifice 115. The first airflow A1 can have higher axial velocity near the central body 110 than near the annular first wall 121 to drive the flame downstream (aft) away from the central body 110 which can reduce or eliminate flame holding or flashback. Additionally, the second fuel flow F2 can be provided from the fuel plenum 109 to at least one respective second fuel passage 112. The second fuel flow F2 is radially injected through the respective second orifice 116 defined through the respective first swirler vane 104, and into the combustion zone 140 downstream of the first orifice 115. The respective second orifices 116 are radially outward and axially downstream from the first orifice 115, allowing a progressive mixing of fuel and air within the fuel nozzle 100, thereby resulting in lower NOₓ emissions and better flame stability than conventional fuel nozzles.

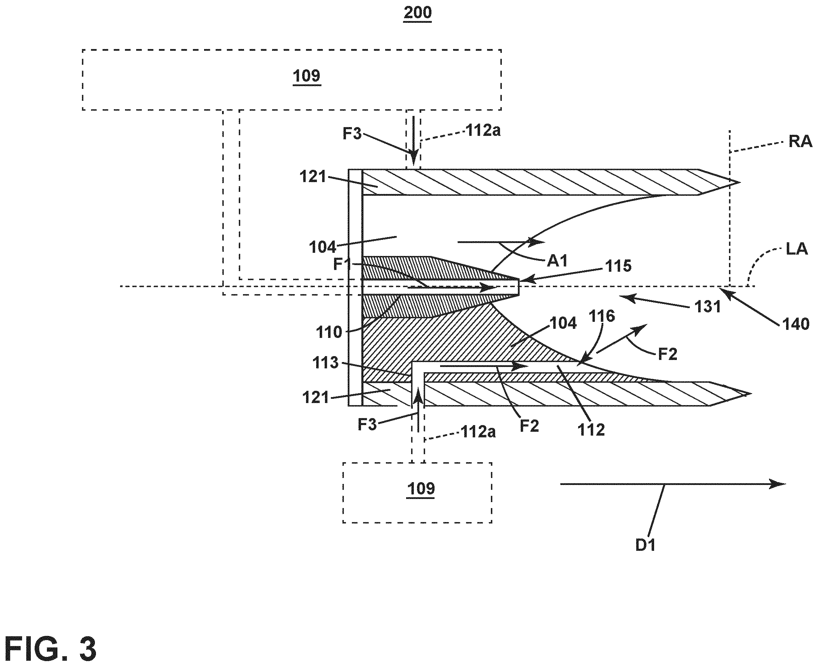

FIG. 3 depicts a depicts an offset section view taken along the line I-I of FIG. 2A of another non-limiting aspect of the fuel nozzle 200. The fuel nozzle 200 depicted in FIG. 3 is similar to the fuel nozzle 100 of FIGS. 2A and 2B, so like parts will be labelled with like reference numbers. One notable difference between the fuel nozzle 200 of FIG. 3 and the fuel nozzle 100 of FIGS. 2A-2B, is that in the fuel nozzle 200 of FIG. 3 is arranged to radially deliver a third flow of fuel F3 to the respective second fuel passages 112 via a set of third fuel passages 113.

For example, in non-limiting aspects, the annular first wall 121 and a respective first swirler vane 104 can cooperatively define a respective third fuel passage 113 therethrough. The respective third fuel passage 113 can extend radially through the annular first wall 121 and extend radially through a respective first swirler vane 104 (e.g., parallel with the radial axis RA of the fuel nozzle 100).

In non-limiting aspects, a respective third fuel passage 113 can be arranged in fluid communication with each respective second fuel passage 112. The respective third fuel passage 113 can be further in fluid communication with the fuel plenum 109, for example via a respective second fuel line 112a, to receive a respective third flow of fuel F3 therefrom. The respective third fuel passages 113 can be fluidly coupled at a respective upstream end to the respective second fuel line 112a, and fluidly coupled at an opposing downstream end to a respective second fuel passage 112.

In operation, compressed air from the compressor section 12 (shown in FIG. 1) can enter the annular first airflow passage 131 of the fuel nozzle 100 as the first airflow A1 along the first flow direction D1. The first fuel flow F1 is provided from the fuel plenum 109 to the first fuel passage 111 and axially injected into the combustion zone 140 through the first orifice 115 defined through the central body 110. The set of first swirler vanes 104 arranged within the annular first airflow passage 131 can impart a tangential, swirling, or helical component to the first airflow A1. The third flow of fuel F3 can be provided to a respective third fuel passage 113 from a respective second fuel line 112a, and subsequently radially provided to the respective second fuel passages 112 extending axially through a respective first swirler vane 104 to define the respective second flow of fuel F2 axially therethrough. In this sense, the third flow of fuel F3 flows radially through the third fuel passage 113, and is subsequently redirected axially to the second fuel passage 112 as the second flow of fuel F2, The second flow of fuel F2 can then be directed axially, in the first direction D1 through the respective second fuel passage 112 and injected into the combustion zone 140 by the respective second orifice 116 to be mixed with the first flow of air A1 therein. In this way, by radially providing a respective third flow of fuel F3 to a respective second fuel passage 112 to define the second flow of fuel F2 therethrough, fuel can be provided axially to the respective second orifice 116 without obstructing the annular first airflow passage 131 with fuel lines, fittings and the like.

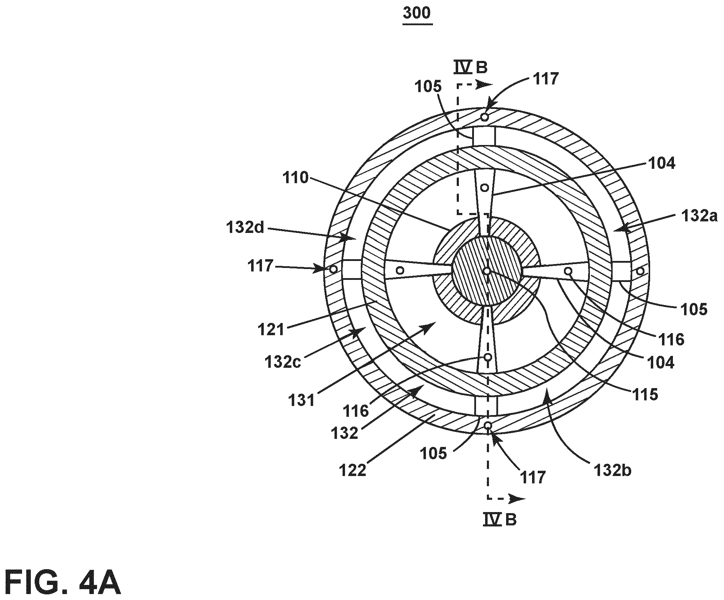

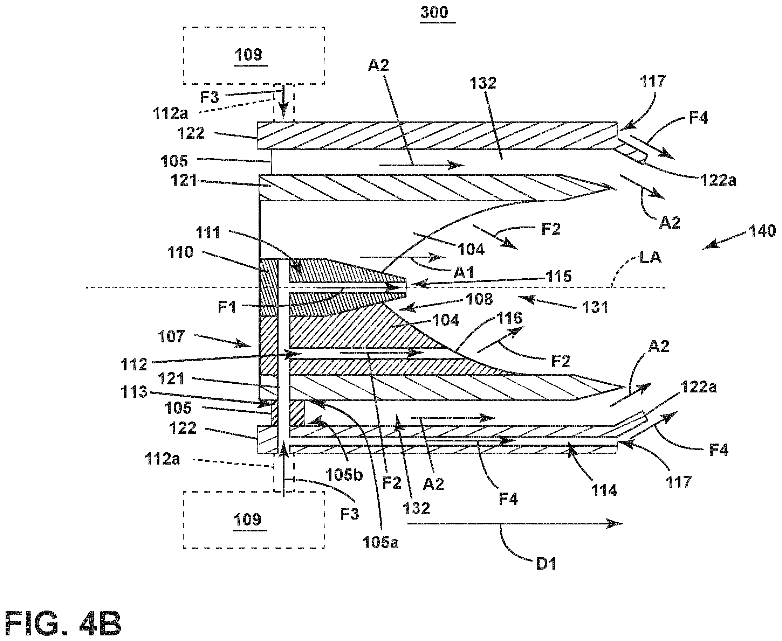

FIG. 4A is a cross-section view of another non-limiting aspect of a fuel nozzle 300, and FIG. 4B depicts an offset section view taken along the line IVB-IVB of the fuel nozzle 300 of FIG. 4A. The fuel nozzle 300 depicted in FIGS. 4A and 4B are similar to the fuel nozzle 100, 200 of FIGS. 2A, 2B, and 3, so like parts will be labelled with like reference numbers. Some notable differences between the fuel nozzle 300 of FIGS. 4A-4B and the nozzle 100, 200 of FIGS. 2A, 2B, and 3, is that the fuel nozzle 300 of FIGS. 4A-4B further includes an annular second wall 122, a fourth fuel passage 114, a set of third orifices 117, an annular second airflow passage 132, and a set of second swirler vanes 105. Another notable difference from the fuel nozzle 100, 200 of FIGS. 2A, 2B, and 3 is that in the aspect depicted in FIGS. 4A-4B, the third fuel passage 113 can be further coupled in fluid communication with at least one of the fourth fuel passage 114, the second fuel passage 112, or the first fuel passage 111.

With simultaneous reference to FIGS. 4A and 4B, the annular second wall 122 can circumferentially surround the annular first wall 121. The annular second wall 122 can be concentric with the annular first wall 121. The annular second wall 122 can be further spaced from the annular first wall 121 to define the annular second airflow passage 132 therebetween. The annular second airflow passage 132 is configured to permit a second airflow (indicated by solid arrow A2) therethrough in the first flow direction D1. For example, the second airflow A2 can comprise a flow of compressed air received from the compressor section 12. The annular second wall 122 can further define a set of fourth fuel passages 114 therein, and further define a respective third orifice 117 in fluid communication with a respective fourth fuel passage 114. The respective fourth fuel passage 114 can extend axially through at least a portion of the annular second wall 122 (e.g., parallel with the longitudinal axis LA of the fuel nozzle 100). Each respective fourth fuel passage 114 can be configured to permit a respective fourth flow of fuel (indicated by solid arrow, "F4") in the first flow direction D1.

The annular second wall 122 can include a second converging portion 122a at a downstream end of the annular second wall 122. The second converging portion 122a defines a decreasing or converging cross-sectional area. In an alternative example, the annular second wall 122 can be formed as converging, diverging, constant, or any combination thereof, which can be defined by linear, curved, or discrete wall geometries defining the annular second wall 122, or combinations thereof. The second converging portion 122a of the annular second wall 122 provides for reducing flow recirculation at the downstream end of the annular second wall 122, which can eliminate stagnation points and flame holding.

The set of second swirler vanes 105 or struts can be disposed in the annular second airflow passage 132. The set of second swirler vanes 105 can be circumferentially spaced about the central body 110. The set of second swirler vanes 105 can be disposed within the second airflow passage 132. The second swirler vanes 105 can extend radially within the annular second airflow passage 132 from the annular first wall 121 to the annular second wall 122. For example, the second swirler vanes 105 can be coupled at a respective first end 105a to the annular first wall 121 and can be coupled at a respective opposing second end 105b to the annular second wall 122. In this way, the second swirler vanes 105 can divide the annular second airflow passage 132 into a set of second airflow passage circumferential segments 132a, 132b, 132c, 132d.

While FIG. 4A depicts the fuel nozzle 300 as having four second swirler vanes 105, other aspects are not so limited, and the fuel nozzle 300 can include any desired number of second swirler vanes 105, including only one, without departing from the scope of the disclosure. Furthermore, although FIG. 4A depicts the second swirler vanes 105 being arranged symmetrically about the central body 110, for example at substantially equal circumferential distances from each other around the central body 110, in other aspects, a spacing between the second swirler vanes 105 can vary, and the second swirler vanes 105 can be arranged non-symmetrically around the central body 110. For example, in some aspects, a circumferential spacing between two adjacent second swirler vanes 105 can be different than another two adjacent second swirler vanes 105.

In non-limiting aspects each second swirler vane 105 can be circumferentially aligned with a respective first swirler vane 104. Other aspects are not so limited, for example, in some aspects, one or more first swirler vane 104 may be aligned with, partially aligned with, or fully offset from a respective second swirler vane 105.

In non-limiting aspects, a respective third fuel passage 113 can be defined to extend radially through the annular second wall 122, and coupled in fluid communication with a respective fourth fuel passage 114. In other aspects, the respective third fuel passage 113 can be further cooperatively defined through the annular second wall 122, a respective second swirler vane 105, the annular first wall 121, and further through a respective first swirler vane 104. In some aspects, as illustrated, the respective third fuel passage 113 can be further coupled in fluid communication with a respective second fuel passage 112. In still other non-limiting aspects, a respective third fuel passage 113 can be further coupled in fluid communication with the first fuel passage 111. In non-limiting aspects, a respective third fuel passage 113 can be in fluid communication with the fuel plenum 109, for example via a respective second fuel line 112a, to receive the third flow of fuel F3 therefrom.

Each respective fourth fuel passage 114 can be configured to convey a respective fourth flow of fuel F4 in the first flow direction D1 (e.g., axially) to a respective third orifice 117defined through a downstream facing surface of the annular second wall 122. The respective third orifice 117 can be configured to axially receive the fourth flow of fuel F4 from the fourth fuel passage 114, and to inject the respective fourth flow of fuel F4 from the respective fourth fuel passage 114 toward the combustion zone 140. In non-limiting aspects, each respective third orifice 117 can be configured to inject a respective fourth flow of fuel F4, as a converging flow (e.g., tangential to the longitudinal axis LA of the fuel nozzle 100), into the combustion zone 140.

In operation, compressed air from the compressor section 12 (shown in FIG. 1) can enter the annular first airflow passage 131 of the fuel nozzle 300 as the first airflow A1 along the first flow direction D1, and further enter the annular second airflow passage 132 as the second airflow A2 along the first flow direction D1 The set of first swirler vanes 104 arranged within the annular first airflow passage 131 can impart a tangential, swirling, or helical component to the first airflow A1. In non-limiting aspects, the set of second swirler vanes 105 can impart a tangential, swirling, or helical component to the second airflow A2. The set of second swirler vanes 104 can also separate the second airflow A2 into multiple separate flows. For example, the four second swirler vanes 105 depicted in FIG. 4A can separate the second airflow A2 into four circumferentially separated second airflows A2, each within a respective second airflow passage circumferential segment 132a, 132b, 132c, 132d. In other aspects, the number of circumferentially separated second airflows A2 can be equal to the number of second swirler vanes 105. The circumferentially separated second airflows A2 within the second airflow passage 132 separated by the second swirler vanes 105 can swirl in the same direction to minimize any shear between the circumferentially separated second airflows A2, while counter-flow is contemplated where increased mixing or turbulence may be advantageous.

The third fuel flow F3 is provided from the fuel plenum 109 to the respective third fuel passage 113. The respective third fuel passage 113 can radially provide or distribute a portion of the third flow of fuel F3 to the respective fourth fuel passage 114 as the fourth flow of fuel F4, and further provide or distribute another portion of the third flow of fuel F3 to the respective second fuel passage 112 as the second flow of fuel F2, and still further distribute another portion of the third flow of fuel F3 to the first fuel passage 111 as the first flow of fuel F1, and combinations thereof. In this sense, the third flow of fuel F3 can flow radially through the third fuel passage 113, and subsequently redirected axially to the first fuel passage F1 as the first flow of fuel F1, or to the second fuel passage 112 as the second flow of fuel F2, or to the fourth fuel passage 114 as the fourth flow of fuel F4. In this way, the third flow of fuel F3 can be distributed to one or more of the respective first, second, and fourth fuel passages 111, 112, 114 without obstructing the annular first airflow passage 131, nor the annular second airflow passage 132, with fuel lines, hoses, fittings and the like.

The first fuel flow F1 is axially conveyed through the first fuel passage 111 and axially injected into the combustion zone 140 through the first orifice 115 defined through the central body 110. The first airflow A1 mixes with the first fuel flow F1 injected by the first orifice 115. Additionally, the second fuel flow F2 is axially conveyed through the second fuel passage 112 and injected the combustion zone 140 through the second fuel defined through the respective first swirler vane 104, and into the combustion zone 140 downstream of the first orifice 115. Each respective second orifice 116 is disposed radially outward and axially downstream from the first orifice 115, allowing a progressive mixing of fuel and air within the fuel nozzle 300, thereby resulting in lower NOₓ emissions and better flame stability than conventional fuel nozzles. Additionally, the fourth fuel flow F4 is axially conveyed through the fourth fuel passage 114 and injected into the combustion zone 140 through the second fuel defined through the annular second wall 122, and into the combustion zone 140 downstream of the first orifice 115, allowing a further progressive mixing of fuel and air within the fuel nozzle 300, thereby resulting in lower NOₓ emissions and better flame stability than conventional fuel nozzles.

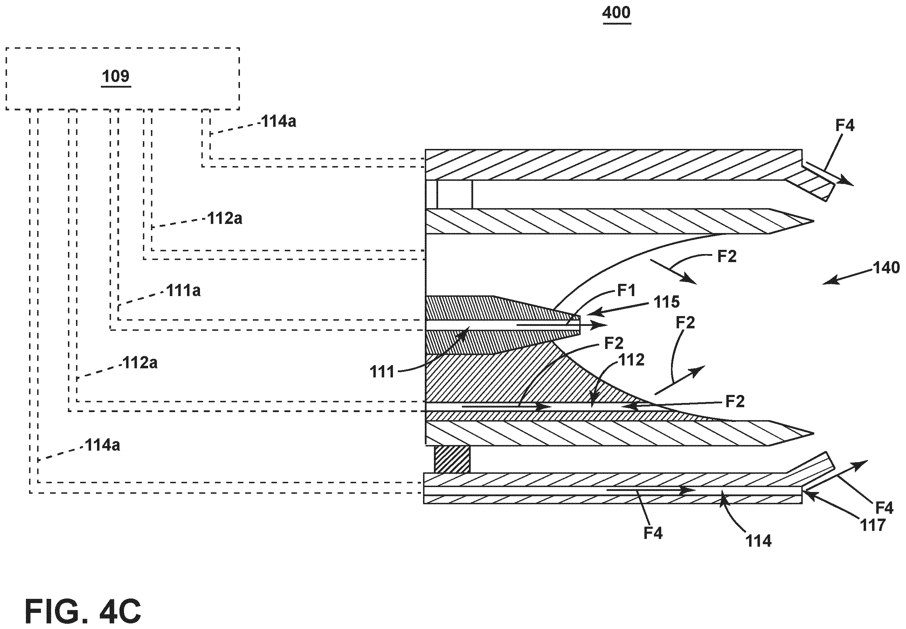

FIG. 4C depicts an offset section view taken along the line I-I of FIG. 4A of another non-limiting aspect of the fuel nozzle 400. The fuel nozzle 400 depicted in FIG. 4C is similar to the fuel nozzle 300 of FIGS. 4A-4B, so like parts will be labelled with like reference numbers. One notable difference between the fuel nozzle 400 of FIG. 4C and the fuel nozzle 300 of FIGS. 4A-4B is that the fuel nozzle 400 of FIG. 4C omits the respective third fuel passage 113, with fuel being provided axially.

The first fuel passage 111 is configured to permit the first flow of fuel F1 in the first flow direction D1, and the first orifice 115 is configured to exhaust the first flow of fuel F1 from the first fuel passage 111 toward the combustion zone 140. The first fuel passage 111 can be in fluid communication with a fuel supply such as the fuel manifold or fuel plenum 109, for example via the first fuel line 111a, to axially receive the first flow of fuel F1 therefrom. In the exemplary aspect of FIG. 4C, each respective second fuel passage 112 can be in fluid communication with the fuel supply such as the fuel plenum 109, for example via a respective second fuel line 112a, to axially receive the second flow of fuel F2 therefrom. Each respective fourth fuel passage 114 can be in fluid communication with the fuel plenum 109, for example via a respective third fuel line 114a, to axially receive the respective third flow of fuel F3 therefrom.

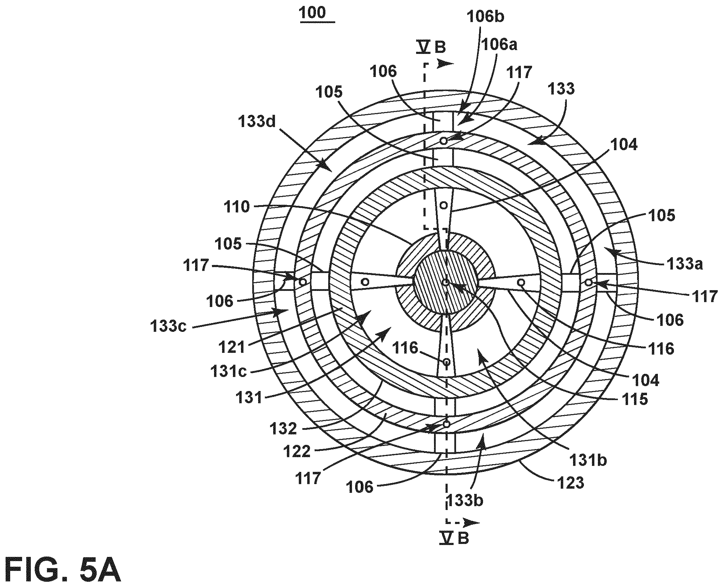

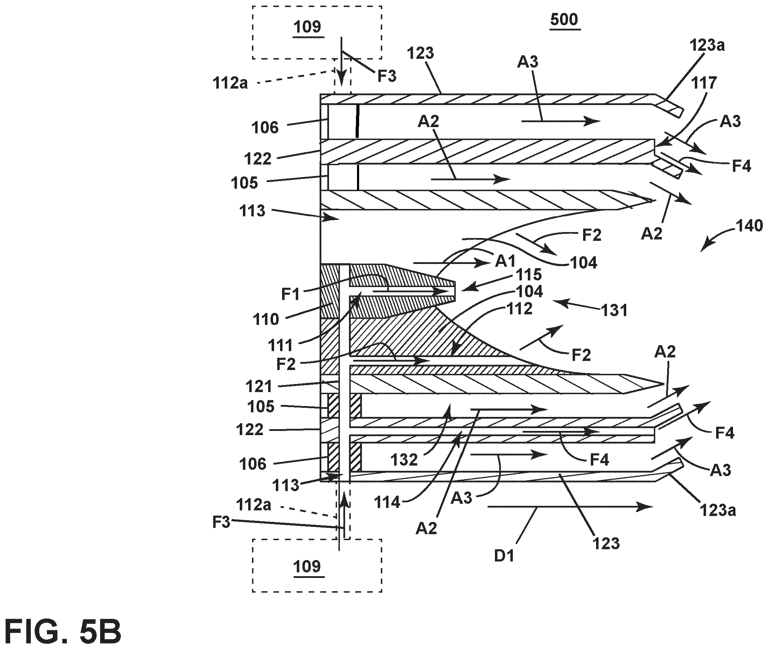

FIG. 5A is a cross-section view of another non-limiting aspect of a fuel nozzle 500, and FIG. 5B depicts an offset section view taken along the line VB-VB of the fuel nozzle 500 of FIG. 5A. The fuel nozzle 500 depicted in FIGS. 5A and 5B is similar to the fuel nozzle 300 of FIGS. 4A-4B, so like parts will be labelled with like reference numbers. Some notable differences between the fuel nozzle 500 of FIGS. 5A-5B and the fuel nozzle 300 of FIGS. 4A-4B, is that the fuel nozzle 500 of FIGS. 5A-5B further includes an annular third wall 123, an annular third airflow passage 133, and a set of third swirler vanes 106.

With simultaneous reference to FIGS. 5A and 5B, the annular third wall 123 can circumferentially surround the annular second wall 122. The annular third wall 123 can be concentric with the annular second wall 122 or the annular first wall 121, or both. The annular third wall 123 can be further spaced from the annular second wall 122 to define the annular third airflow passage 133 therebetween. The annular third airflow passage 133 is configured to permit a third airflow (indicated by solid arrow A3) therethrough in the first flow direction D1. For example, the third airflow A3 can comprise a flow of compressed air received from the compressor section 12 (shown in FIG. 1).

The annular third wall 123 can include a third converging portion 123a at a downstream end of the annular third wall 123. The third converging portion 123a defines a decreasing or converging cross-sectional area. In an alternative example, the annular third wall 123 can be formed as converging, diverging, constant, or any combination thereof, which can be defined by linear, curved, or discrete wall geometries defining the annular third wall 123, or combinations thereof. The third converging portion 123a of the annular third wall 123 provides for reducing flow recirculation at the downstream end of the annular third wall 123, which can eliminate stagnation points and flame holding.

The set of third swirler vanes 106 or struts can be disposed in the annular third airflow passage 133. The set of third swirler vanes 106 can be circumferentially spaced about the central body 110. The set of third swirler vanes 106 can be disposed within the annular third airflow passage 133. The third swirler vanes 106 can extend radially within the annular third airflow passage 133 from the annular second wall 122 to the annular third wall 123. For example, the third swirler vanes 106 can be coupled at a respective first end 106a to the annular second wall 122 and can be coupled at a respective opposing second end 106b to the annular third wall 123. In this way, the third swirler vanes 106 can divide the annular third airflow passage 133 into a set of third airflow passage circumferential segments 133a, 133b, 133c, 133d.

While FIG. 5A depicts the fuel nozzle 500 as having four third swirler vanes 106, other aspects are not so limited, and the fuel nozzle 500 can include any desired number of third swirler vanes 106, including only one, without departing from the scope of the disclosure. Furthermore, although FIG. 5A depicts the third swirler vanes 106 being arranged symmetrically about the central body 110, for example at substantially equal circumferential distances from each other around the central body 110, in other aspects, a spacing between the third swirler vanes 106 can vary, and the third swirler vanes 106 can be arranged non-symmetrically around the central body 110. For example, in some aspects, a circumferential spacing between two adjacent third swirler vanes 106 can be different than another two adjacent third swirler vanes 106.

In non-limiting aspects, each third swirler vane 106 can be circumferentially aligned with a respective second swirler vane 105, or a first swirler vane 104, or both. Other aspects are not so limited, for example, in some aspects, one or more third swirler vane 106 may be aligned with, partially aligned with, or fully offset from a respective second swirler vane 105 or first swirler vane 104, or both.

In non-limiting aspects, the respective third fuel passage 113 can be further defined to extend radially through the annular third wall 123, a respective third swirler vane 106, the annular second wall 122, and coupled in fluid communication with a respective fourth fuel passage 114. In other aspects, the respective third fuel passage 113 can be further cooperatively defined through the annular second wall 122, a respective second swirler vane 105, the annular first wall 121, and further through a respective first swirler vane 104. In some aspects, as illustrated, the respective third fuel passage 113 can be still further coupled in fluid communication with a respective second fuel passage 112. In still other non-limiting aspects, a respective third fuel passage 113 can be further coupled in fluid communication with the first fuel passage 111. In non-limiting aspects, a respective third fuel passage 113 can be in fluid communication with the fuel plenum 109, for example via a respective fuel line 112a, to receive the third flow of fuel F3 therefrom.

In operation, compressed air from the compressor section 12 (shown in FIG. 1) can enter the annular first airflow passage 131 of the fuel nozzle 300 as the first airflow A1 along the first flow direction D1, and further enter the annular second airflow passage 132 as the second airflow A2 along the first flow direction D1, and further enter the annular third airflow passage 133 as the third airflow A3 along the first flow direction D1. The set of first swirler vanes 104 arranged within the annular first airflow passage 131 can impart a tangential, swirling, or helical component to the first airflow A1. In non-limiting aspects, the set of second swirler vanes 105 arranged within the annular second airflow passage 132 can impart a tangential, swirling, or helical component to the second airflow A2. In non-limiting aspects, the set of third swirler vanes 106 arranged within the annular third airflow passage 133 can impart a tangential, swirling, or helical component to the third airflow A3. The set of third swirler vanes 106 can also separate the third airflow A3 into multiple separate flows. For example, the four third swirler vanes 106 depicted in FIG. 5A can separate the third airflow A3 into four circumferentially separated third airflows A3, each within a respective third airflow passage circumferential segment 133a, 133b, 133c, 133d. In other aspects, the number of circumferentially separated third airflows A3 can be equal to the number of third swirler vanes 106. The circumferentially separated third airflows A3 within the annular third airflow passage 133 separated by the third swirler vanes 106 can swirl in the same direction to minimize any shear between the circumferentially separated third airflows A3, while counter-flow is contemplated where increased mixing or turbulence may be advantageous.

The third fuel flow F3 is provided from the fuel plenum 109 to the respective third fuel passage 113. The respective third fuel passage 113 can radially provide or distribute a portion of the third flow of fuel F3 to the respective fourth fuel passage 114 as the fourth flow of fuel F4, and further provide or distribute another portion of the third flow of fuel F3 to the respective second fuel passage 112 as the second flow of fuel F2, and still further distribute another portion of the third flow of fuel F3 to the first fuel passage 111 as the first flow of fuel F1, and combinations thereof. In this sense, the third flow of fuel F3 can flow radially through the third fuel passage 113, and subsequently redirected axially to the first fuel passage F1 as the first flow of fuel F1, or to the second fuel passage 112 as the second flow of fuel F2, or to the fourth fuel passage 114 as the fourth flow of fuel F4. In this way, the third flow of fuel F3 can be distributed to one or more of the respective first, second, and fourth fuel passages 111, 112, 114 without obstructing the annular first airflow passage 131, nor the annular second airflow passage 132, with fuel lines, hoses, fittings and the like.

The first fuel flow F1 is axially conveyed through the first fuel passage 111 and axially injected into the combustion zone 140 through the first orifice 115 defined through the central body 110. The first airflow A1 mixes with the first fuel flow F1 injected by the first orifice 115. Additionally, the second fuel flow F2 is axially conveyed through the second fuel passage 112 and injected into the combustion zone 140 through the second orifice 116 defined through the respective first swirler vane 104, and into the combustion zone 140 downstream of the first orifice 115. Each respective second orifice 116 is disposed radially outward and axially downstream from the first orifice 115, allowing a progressive mixing of fuel and air within the fuel nozzle 300, thereby resulting in lower NOₓ emissions and better flame stability than conventional fuel nozzles. Additionally, the fourth fuel flow F4 is axially conveyed through the fourth fuel passage 114 and injected into the combustion zone 140 through the third orifice 117 defined through the annular second wall 122, allowing a further progressive mixing of fuel and air within the fuel nozzle 300, thereby resulting in lower NOₓ emissions and better flame stability than conventional fuel nozzles.

The features included herein provide for improved fuel supply to a turbine engine combustor, which provides for reducing or eliminating flame holding or flashback at the fuel nozzle 100, 200, 300, 400, 500. Such reduction or elimination provides for the use of higher temperature fuels, such as hydrogen fuels, which provide for improving or maintaining efficiency while reducing or eliminating emissions.

Additionally, in various aspects, each of the first fuel flow F1, second fuel flow F2, and fourth fuel flow F4 can be either swirling or non-swirling. In one example, all three of the first fuel flow F1, second fuel flow F2, and fourth fuel flow F4 can be imparted with a swirling component in the same direction in order to decrease shear between the different flows. Alternatively, only the first fuel flow F1 can be non-swirling, which can provide for moving any recirculation zone aft or downstream of the end of the first fuel passage 111, which can reduce or eliminate flame holding and flashback. In yet another example, the first fuel passage 111 can be used as a pilot or for introducing other materials, such as diluents for nitrogen oxide suppression in one non-limiting example. It should be appreciated that the differing use of swirling or non-swirling airflows can be utilized to define a velocity profile for the fuel and air being provided, which can be utilized to reduce or eliminate the occurrence of flame holding or flashback at the fuel nozzle 200, permitting the use of higher temperature fuels such as hydrogen.

It should be further appreciated that varying the rate of swirl for the fuel flow from the fuel nozzle and the air flow from the swirler can be utilized to develop complex velocity profiles, which can be tailored to reduce or eliminate flame holding, flashback, and recirculation at various radial positions for the fuel nozzle, which can provide for the use of faster-burning or higher-temperature fuels, such as hydrogen or hydrogen mixes.

It should be appreciated that the aspects provided herein are not limited only to those aspects as shown. More specifically, one or more aspects of one aspect can be combined with, interchanged with, or removed from one or more of the other aspects, such that additional aspects are contemplated within the scope of this disclosure by a person having ordinary skill in the art, while not explicitly shown.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses.

A turbine engine, comprising: a compressor section, combustor section, and turbine section in serial flow arrangement, with the combustor section including a fuel nozzle defining a longitudinal axis and a radial axis orthogonal thereto, the fuel nozzle including: a central body defining a first fuel passage extending axially therethrough terminating at a first orifice, an annular first wall circumferentially surrounding the central body and spaced therefrom to define a first airflow passage therebetween; and a set of first swirler vanes circumferentially spaced about the central body and disposed within the first airflow passage, each first swirler vane extending radially outward from the central body toward the annular first wall, at least one first swirler vane defining a respective second fuel passage extending axially therethrough and terminating at a respective second orifice; wherein the first orifice is configured to inject a first flow of fuel toward a combustion zone, and the respective second orifice is configured to inject a respective second flow of fuel toward the combustion zone.

The turbine engine of any preceding clause, wherein the set of first swirler vanes impart a tangential swirl to a first airflow in the first airflow passage.

The turbine engine of any preceding clause, wherein the respective second orifice is arranged downstream of the first orifice.

The turbine engine of any preceding clause, wherein the respective second orifice is configured to inject the respective second flow of fuel tangential to the longitudinal axis.

The turbine engine of any preceding clause, wherein the annular first wall and the at least one first swirler vane cooperatively define a respective third fuel passage extending radially therethrough in fluid communication with the respective second fuel passage.

The turbine engine of any preceding clause, wherein the third fuel passage is configured to convey a third flow of fuel radially therethrough toward the respective second fuel passage.

The turbine engine of any preceding clause, further comprising: an annular second wall circumferentially surrounding the central body and spaced therefrom to define an annular second airflow passage therebetween, the annular second wall defining a respective fourth fuel passage extending axially therethrough and terminating at a respective third orifice configured to inject a fourth flow of fuel toward the combustion zone; and a set of second swirler vanes circumferentially spaced about the central body and disposed within the annular second airflow passage, each second swirler vane extending radially outward from the annular first wall toward the annular second wall

The turbine engine of any preceding clause, wherein the set of second swirler vanes impart a tangential swirl to a second airflow in the second airflow passage.

The turbine engine of any preceding clause, wherein the respective third orifice is arranged downstream of the first orifice.

The turbine engine of any preceding clause, wherein the respective third orifice is configured to inject the respective fourth flow of fuel tangential to the longitudinal axis.

The turbine engine of any preceding clause, wherein the annular second wall further defines a third fuel passage extending radially therethrough in fluid communication with the respective fourth fuel passage.

The turbine engine of any preceding clause, wherein the third fuel passage is configured to convey a third flow of fuel radially therethrough toward the respective fourth fuel passage.

The turbine engine of any preceding clause, wherein the annular second wall, the at least one second swirler vane , the annular first wall, and at least one first swirler vane cooperatively define a respective third fuel passage extending radially therethrough in fluid communication with a respective fourth fuel passage and a respective second fuel passage.

The turbine engine of any preceding clause, wherein the third fuel passage is configured to convey a third flow of fuel radially therethrough to the respective fourth fuel passage and the respective second fuel passage.

The turbine engine of any preceding clause, wherein the annular second wall, the at least one second swirler vane , the annular first wall, and at least one first swirler vane cooperatively define a respective third fuel passage extending radially therethrough in fluid communication with the respective fourth fuel passage, a respective second fuel passage, and the first fuel passage.

The turbine engine of any preceding clause, wherein the third fuel passage is configured to convey a third flow of fuel radially therethrough to the respective fourth fuel passage, the respective second fuel passage, and the first fuel passage.

The turbine engine of any preceding clause, further comprising: an annular third wall circumferentially surrounding the central body and spaced therefrom to define an annular third airflow passage therebetween; and a set of third swirler vanes circumferentially spaced about the central body and disposed within the annular third airflow passage, each third swirler vane extending radially outward from the annular second wall toward the annular third wall.

The turbine engine of any preceding clause, wherein the set of third swirler vanes impart a tangential swirl to the third airflow in the third airflow passage.

The turbine engine of any preceding clause, wherein the annular third wall, the annular second wall, and at least one third swirler vane cooperatively define a respective third fuel passage extending radially therethrough in fluid communication with the respective fourth fuel passage.

The turbine engine of any preceding clause, wherein the third fuel passage is configured to convey a third flow of fuel radially therethrough to the respective fourth fuel passage.

A fuel nozzle including a central body having a longitudinal axis and a radial axis orthogonal thereto, the fuel nozzle including: a central body defining a first fuel passage extending axially therethrough terminating at a first orifice, an annular first wall circumferentially surrounding the central body and spaced therefrom to define a first airflow passage therebetween; and a set of first swirler vanes circumferentially spaced about the central body and disposed within the first airflow passage, each first swirler vane extending radially outward from the central body toward the annular first wall, at least one first swirler vane defining a respective second fuel passage extending axially therethrough and terminating at a respective second orifice; wherein the first orifice is configured to inject a first flow of fuel toward a combustion zone, and the respective second orifice is configured to inject a respective second flow of fuel toward the combustion zone.

The fuel nozzle of any preceding clause, wherein the set of first swirler vanes impart a tangential swirl to a first airflow in the first airflow passage.

The fuel nozzle of any preceding clause, wherein the respective second orifice is arranged downstream of the first orifice.

The fuel nozzle of any preceding clause, wherein the respective second orifice is configured to inject the respective second flow of fuel tangential to the longitudinal axis.

The fuel nozzle of any preceding clause, wherein the annular first wall and the at least one first swirler vane cooperatively define a respective third fuel passage extending radially therethrough in fluid communication with the respective second f

The fuel nozzle of any preceding clause, wherein the third fuel passage is configured to convey a third flow of fuel radially therethrough toward the respective second fuel passage.

The fuel nozzle of any preceding clause, further comprising: an annular second wall circumferentially surrounding the central body and spaced therefrom to define an annular second airflow passage therebetween, the annular second wall defining a respective fourth fuel passage extending axially therethrough and terminating at a respective third orifice configured to inject a fourth flow of fuel toward the combustion zone; and a set of second swirler vanes circumferentially spaced about the central body and disposed within the annular second airflow passage, each second swirler vane extending radially outward from the annular first wall toward the annular second wall

The fuel nozzle of any preceding clause, wherein the set of second swirler vanes impart a tangential swirl to a second airflow in the second airflow passage.

The fuel nozzle of any preceding clause, wherein the respective third orifice is arranged downstream of the first orifice.

The fuel nozzle of any preceding clause, wherein the respective third orifice is configured to inject the respective fourth flow of fuel tangential to the longitudinal axis.

The fuel nozzle of any preceding clause, wherein the annular second wall further defines a third fuel passage extending radially therethrough in fluid communication with the respective fourth fuel passage.

The fuel nozzle of any preceding clause, wherein the third fuel passage is configured to convey a third flow of fuel radially therethrough toward the respective fourth fuel passage.

The fuel nozzle of any preceding clause, wherein the annular second wall, the at least one second swirler vane , the annular first wall, and at least one first swirler vane cooperatively define a respective third fuel passage extending radially therethrough in fluid communication with a respective fourth fuel passage and a respective second fuel passage.

The fuel nozzle of any preceding clause, wherein the third fuel passage is configured to convey a third flow of fuel radially therethrough to the respective fourth fuel passage and the respective second fuel passage.

The fuel nozzle of any preceding clause, wherein the annular second wall, the at least one second swirler vane, the annular first wall, and at least one first swirler vane cooperatively define a respective third fuel passage extending radially therethrough in fluid communication with the respective fourth fuel passage, a respective second fuel passage, and the first fuel passage.

The fuel nozzle of any preceding clause, wherein the third fuel passage is configured to convey a third flow of fuel radially therethrough to the respective fourth fuel passage, the respective second fuel passage, and the first fuel passage.

The fuel nozzle of any preceding clause, further comprising: an annular third wall circumferentially surrounding the central body and spaced therefrom to define an annular third airflow passage therebetween; and a set of third swirler vanes circumferentially spaced about the central body and disposed within the annular third airflow passage, each third swirler vane extending radially outward from the annular second wall toward the annular third wall.

The fuel nozzle of any preceding clause, wherein the set of third swirler vanes impart a tangential swirl to the third airflow in the third airflow passage.

The fuel nozzle of any preceding clause, wherein the annular third wall, the annular second wall, and at least one third swirler vane cooperatively define a respective third fuel passage extending radially therethrough in fluid communication with the respective fourth fuel passage.

## Claims

1. A turbine engine (10), comprising:
a compressor section (12), combustor section (14), and turbine section (16) in serial flow arrangement, with the combustor section (14) including a fuel nozzle (100), (200), (300), (400), (500) defining a longitudinal axis (LA) and a radial axis (RA) orthogonal thereto, the fuel nozzle (100), (200), (300), (400), (500) including:
a central body (110) defining a first fuel passage (111) extending axially therethrough terminating at a first orifice (115),
an annular first wall (121) circumferentially surrounding the central body (110) and spaced therefrom to define a first airflow passage (131) therebetween; and
a set of first swirler vanes (104) circumferentially spaced about the central body (110) and disposed within the first airflow passage (131), each first swirler vane (104) extending radially outward from the central body (110) toward the annular first wall (121), at least one first swirler vane (104) defining a respective second fuel passage (112) extending axially therethrough and terminating at a respective second orifice (116);
wherein the first orifice (115) is configured to inject a first flow of fuel (F1) toward a combustion zone, and the respective second orifice (116) is configured to inject a respective second flow of fuel (F2) toward the combustion zone (140).

2. The turbine engine (10) of claim 1, wherein the set of first swirler vanes (104) impart a tangential swirl to a first airflow (A1) in the first airflow passage (131).

3. The turbine engine (10) of claim 1, wherein the respective second orifice (116) is arranged downstream of the first orifice (115).

4. The turbine engine (10) of claim 1, wherein the annular first wall (121) and the at least one first swirler vane (104) cooperatively define a respective third fuel passage (113) extending radially therethrough in fluid communication with the respective second fuel passage (112).

5. The turbine engine (10) of claim 4, wherein the third fuel passage (113) is configured to convey a third flow of fuel (F3) radially therethrough toward the respective second fuel passage (112).

6. The turbine engine (10) of claim 1, further comprising:
an annular second wall (122) circumferentially surrounding the central body (110) and spaced therefrom to define an annular second airflow passage (132) therebetween, the annular second wall (122) defining a respective fourth fuel passage (114) extending axially therethrough and terminating at a respective third orifice (117) configured to inject a fourth flow of fuel (F4) toward the combustion zone (140); and
set of second swirler vanes (105) circumferentially spaced about the central body (110) and disposed within the annular second airflow passage (132), each second swirler vane (105) extending radially outward from the annular first wall (121) toward the annular second wall (122).

7. The turbine engine (10) of claim 6, wherein the annular second wall (122) further defines a third fuel passage (F3) extending radially therethrough in fluid communication with the respective fourth fuel passage (114).

8. The turbine engine (10) of claim 7, wherein the third fuel passage (113) is configured to convey a third flow of fuel (F3) radially therethrough toward the respective fourth fuel passage (114).

9. The turbine engine (10) of claim 6, wherein the annular second wall (122), the at least one second swirler vane (105), the annular first wall (121), and at least one first swirler vane (104) cooperatively define a respective third fuel passage (113) extending radially therethrough in fluid communication with a respective fourth fuel passage (114) and a respective second fuel passage (112).

10. The turbine engine (10) of claim 9, wherein the third fuel passage (113) is configured to convey a third flow of fuel (F3) radially therethrough to the respective fourth fuel passage (114) and the respective second fuel passage (112).

11. The turbine engine (10) of claim 6, wherein the annular second wall (122), the at least one second swirler vane (105), the annular first wall (121), and at least one first swirler vane (104) cooperatively define a respective third fuel passage (113) extending radially therethrough in fluid communication with the respective fourth fuel passage (114), a respective second fuel passage (112), and the first fuel passage (111).

12. The turbine engine (10) of claim 11, wherein the third fuel passage (113) is configured to convey a third flow of fuel (F3) radially therethrough to the respective fourth fuel passage (114), the respective second fuel passage (112), and the first fuel passage (111).

13. The turbine engine (10) of claim 6, further comprising:
an annular third wall (123) circumferentially surrounding the central body (110) and spaced therefrom to define an annular third airflow passage (133) therebetween; and
set of third swirler vanes (106) circumferentially spaced about the central body (110) and disposed within the annular third airflow passage (133), each third swirler vane (106) extending radially outward from the annular second wall (122) toward the annular third wall (123).

14. The turbine engine (10) of claim 13, wherein the annular third wall (123), the annular second wall (122), and at least one third swirler vane (106) cooperatively define a respective third fuel passage (133) extending radially therethrough in fluid communication with the respective fourth fuel passage (114).

15. The turbine engine (10) of claim 14, wherein the third fuel passage (133) is configured to convey a third flow of fuel (F3) radially therethrough to the respective fourth fuel passage (114).
